(19) Europäisches Patentamt
European Patent Office
Office européen des brevets

(11) **EP 3 670 583 A1**

(12) **EUROPEAN PATENT APPLICATION**
published in accordance with Art. 153(4) EPC

(43) Date of publication:
**24.06.2020 Bulletin 2020/26**

(21) Application number: **18846609.8**

(22) Date of filing: **13.07.2018**

(51) Int Cl.:
*C08J 5/04* (2006.01)     *B32B 5/28* (2006.01)

(86) International application number:
**PCT/JP2018/026455**

(87) International publication number:
**WO 2019/035299 (21.02.2019 Gazette 2019/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.08.2017   JP 2017156392**

(71) Applicants:
• **The University of Tokyo**
  **Tokyo 113-8654 (JP)**
• **Dupont Teijin Advanced Papers (Japan), Ltd.**
  **Tokyo 100-6111 (JP)**

(72) Inventors:
• **LI Zaoyang**
  **Tokyo 113-8654 (JP)**

• **OHSAWA Isamu**
  **Tokyo 113-8654 (JP)**
• **ZUSHI Hiroaki**
  **Tokyo 113-8654 (JP)**
• **TAKAHASHI Jun**
  **Tokyo 113-8654 (JP)**
• **NARUSE Shinji**
  **Tokyo 100-6111 (JP)**
• **FUJIMORI Tatsushi**
  **Tokyo 100-6111 (JP)**
• **UKIGAYA Koichi**
  **Tokyo 100-6111 (JP)**
• **KONDO Chihiro**
  **Tokyo 100-6111 (JP)**
• **MATSUKI Toshitsugu**
  **Tokyo 100-6111 (JP)**

(74) Representative: **Dehns**
  **St. Bride's House**
  **10 Salisbury Square**
  **London EC4Y 8JD (GB)**

(54) **FIBER-REINFORCED BODY AND MEMBER USING SAME**

(57)     There is provided a fiber-reinforced body comprising a fiber component; a matrix component; and a sheet component, wherein the matrix component and the sheet component exhibit an interpenetrating ability; and a member comprising said fiber-reinforced body. The fiber-reinforced body is excellent in terms of bending impact resistance.

EP 3 670 583 A1

**Description**

Technical Field

The present invention relates to a fiber-reinforced body, and in particular relates to a member made of a fiber-reinforced body which is excellent in impact resistance and suitable for use in automobile structural materials, aircraft structural materials, other industrial structural materials, sporting goods, and the like. The present invention further relates to a method of producing a fiber-reinforced body.

Background Art

Conventionally used structural members for automobiles are formed by using, in general, metallic materials such as iron, aluminum, and stainless steel. In recent years, fiber-reinforced composite materials partially using glass fibers or carbon fibers as reinforcing fibers, that is, glass fiber-reinforced plastics or carbon fiber-reinforced plastics have begun to be employed due to the need for weight reduction.
Although having excellent properties such as light weight, high strength, and high elasticity, fiber-reinforced composite materials have room for improvement in terms of impact resistance, and often do not have impact resistance at a level comparable to their high static strength and elastic modulus. Therefore, depending on the application, weight reduction by fiber-reinforced composite materials may be restricted due to impact resistance.
Thus, it is desired to improve the impact resistance of fiber-reinforced composite materials. As a means for improving impact resistance, Patent Literature 1 describes a method of incorporating inorganic particles into a matrix component resin. However, studies by the present inventors have revealed that there is room for improvement in the impact resistance of a material by this method. In addition, since inorganic particles have a large specific gravity, there is a problem that the weight reduction may be insufficient.

Citation List

Patent Literatures

Patent Literature 1: JP 2001-181406A

Summary of Invention

From such a viewpoint, the object of the present invention is to solve the above-described problem while maintaining excellent properties of a fiber-reinforced body, and to provide a fiber-reinforced body, in particular a fiber-reinforced sheet, having even better impact resistance.
The object of the present invention is also to provide a fiber-reinforced member obtained by three-dimensionally deforming the fiber-reinforced body.
The object of the present invention is also to provide a method of efficiently producing the fiber-reinforced body.
The present inventors have made earnest studies to solve the above-described problem, and have found as a result that the problem described above can be solved by preparing a fiber-reinforced body in which the matrix component and the sheet component exhibit an interpenetrating ability. This finding has led to the completion of the present invention.
Specifically, the present invention includes the following aspects.

1. A fiber-reinforced body comprising: a fiber component; a matrix component; and a sheet component, wherein the matrix component and the sheet component exhibit an interpenetrating ability.
2. The fiber-reinforced body according to 1 described above, wherein a sea-island structural body, in which the matrix component and the fiber component form a sea-island structure, and a sheet composed of the sheet component form a single unit by interpenetration of the matrix component and the sheet component.
3. The fiber-reinforced body according to 2 described above, wherein the sea-island structural body and the sheet form a single unit with a film composed of the matrix component in between.
4. The fiber-reinforced body according to any of 1 to 3 described above, wherein the matrix component is a resin having an amide bond, and the sheet is an aramid sheet.
5. The fiber-reinforced body according to 4 described above, wherein the matrix component is a thermoplastic resin having an amide bond.
6. The fiber-reinforced body according to 4 described above, wherein the aramid sheet contains metaphenylene isophthalamide.

7. The fiber-reinforced body according to any of 1 to 6 described above, wherein the fiber component is a carbon fiber.

8. The fiber-reinforced body according to any of 1 to 7 described above, wherein a volume fraction of the sheet component satisfies the following formula

$$0.3 \text{ (\% by volume)} \leq \text{sheet component} \leq 30 \text{ (\% by volume)}.$$

9. The fiber-reinforced body according to any of 1 to 8 described above, wherein a volume ratio of the fiber component to the matrix component is 1/99 to 40/60.

10. The fiber-reinforced body according to any of 1 to 9 described above, wherein a time at which cohesive failure starts when a 180 degree peel test is performed between the matrix component and the sheet component at a rate of 50 mm/min satisfies the following formula

$$\text{cohesive failure start time} \leq 20 \text{ (seconds)}.$$

11. The fiber-reinforced body according to any of 1 to 10 described above, wherein an air permeability and a thickness of the sheet composed of the sheet component satisfy the following formula

$$\text{air permeability/thickness} \leq 20 \text{ (sec/}\mu\text{m)}.$$

12. The fiber-reinforced body according to any of 1 to 11 described above, wherein an IZOD impact energy absorbability satisfies the following formula

$$\text{IZOD impact energy absorbability} \geq 16 \text{ (kJ/m}^2\text{)}.$$

13. A fiber-reinforced member obtained by three-dimensionally deforming the fiber-reinforced body according to any of 1 to 12 described above.

14. A method of producing the fiber-reinforced body according to 2 described above, comprising stacking the sea-island structural body, in which the matrix component and the fiber component form the sea-island structure, and the sheet composed of the sheet component, then carrying out pressure heating to interpenetrate the matrix component and the sheet component present at a close contact portion between the sea-island structural body and the sheet, to thereby heat-seal the sea-island structural body and the sheet.

15. A method of producing the fiber-reinforced body according to 3 described above, comprising stacking the sea-island structural body, in which the matrix component and the fiber component form the sea-island structure, and the sheet composed of the sheet component with the film composed of the matrix component in between, then carrying out pressure heating to interpenetrate the matrix component present at a close contact portion between the sea-island structural body and the film, and the matrix component and the sheet component present at a close contact portion between the film and the sheet, to thereby heat-seal the sea-island structural body, the film, and the sheet.

The fiber-reinforced body of the present invention is useful as a fiber-reinforced body having a high bending impact resistance because of high three-point bending maximum strength, three-point bending fracture strain, and IZOD impact energy absorbability. In addition, the fiber-reinforced body of the present invention using an aramid sheet or the like as a sheet composed of a sheet component has properties such as good formability, flame retardancy, and heat resistance, and is suitable for three-dimensional processing.

Description of Embodiments

Hereinafter, the present invention is described in detail.

(Fiber Component)

Any fiber component can be selected as the fiber component used in the present invention. Examples thereof include carbon fibers, glass fibers, and aramid fibers. Among these, carbon fibers are preferable, and carbon fibers having particularly high strength and high elastic modulus are preferably used. As a carbon fiber precursor, any fiber can be selected from the following fibers. Commonly used carbon fiber precursors are polyacrylonitrile (hereinafter referred to as PAN) fibers, pitch-based (high boiling point·aromatic component in petroleum or coal) fibers, cellulosic fibers, rayon, and other polymer fibers. Specifically, preferable carbon fibers have a tensile elasticity of 100 to 800 GPa, a tensile strength of 1000 to 8000 MPa, and a breaking elongation of 0.1 to 5%.

The fiber component used in the present invention may have a sizing agent attached to the surface. In the case of using a fiber component having a sizing agent attached thereto, the type of the sizing agent can be appropriately selected according to the type of the fiber component and the matrix component, and is not particularly limited.

As a fiber component, a multifilament obtained by bundling filaments, or a monofilament composed of a single filament may be used. In the case of use as a multifilament, the yarn diameter is 1 $\mu$m to 5000 $\mu$m, and preferably 50 $\mu$m to 1000 $\mu$m. In the case of use as a monofilament, the yarn diameter is 0.1 $\mu$m to 5000 $\mu$m, preferably 2 $\mu$m to 100 $\mu$m, and further preferably 3 $\mu$m to 50 $\mu$m. The number of filaments of the multifilament is preferably 1 to 100000, and more preferably 5 to 500, and further preferably 10 to 100. When the diameter is small, the strength is lowered and handling becomes difficult. Meanwhile, when the diameter is large, flexibility is sacrificed. The cross-sectional shape of the fiber component is preferably a circle or an ellipse, but is not limited.

In addition, the form of the fiber component is also arbitrary, and an appropriate one can be selected depending on the application when the fiber-reinforced body is molded into a sheet shape or a member and how the load is applied. The specific shape may be a long fiber, a short fiber, a mill-shaped structure, a woven structure, a strand structure, or a combination thereof, but is particularly preferably a short fiber which can be easily molded into a sheet shape.

The content ratio of the fiber component blended in the fiber-reinforced body is selected in a preferred manner as long as the effects of the present invention are not impaired, but is preferably 1 to 40% by volume, still further preferably 5 to 30% by volume, and most preferably 10 to 20% by volume based on the volume of the entire fiber-reinforced body.

From the viewpoint of e.g. generation of voids during molding of the fiber-reinforced body, the amount of the fiber component blended is preferably 40% by volume or less, and in addition, from the viewpoint of the strength of the fiber-reinforced body, the amount of the fiber component blended is preferably 1% or more by volume.

(Matrix Component)

The fiber-reinforced body of the present invention includes a matrix component. The resin used for the matrix component can be arbitrarily selected from those that exhibit, when melted, an interpenetrating ability for the sheet component to be described later. The requirement for exhibiting the interpenetrating ability is a similarity in molecular structure. For example, when a polyamide resin having an amide bond in the molecule is molded together with a later-described sheet component mainly composed of an aramid and similarly having an amide bond in the molecule, the polyamide resin exhibits an interpenetrating ability. As another case, there is no particular limitation as long as a similar molecular structure exists in the molecules of the matrix component and the sheet component as described above. When the interpenetrating ability is exhibited, the adhesion with the sheet component is dramatically improved, and the impact resistance is improved. In addition, there is an advantage that the higher the interpenetrating ability, the shorter the cohesive failure start time to be described later.

The matrix component may be any of a thermoplastic resin or a thermosetting resin as long as it exhibits an interpenetrating ability for the sheet component. Of these, the thermoplastic resin is preferable.

Specific examples of the matrix component include polyamide resins when the sheet component is an aramid sheet mainly composed of an aramid, epoxy resins in the case of a sheet mainly composed of phenoxy fibers, polyester resins in the case of a sheet mainly composed of polyester fibers, polyolefin resins in the case of a sheet mainly composed of polyolefin fibers, and the like. Of these, a combination of an aramid sheet and a polyamide resin, which is easy to mold and has high heat resistance, is preferably used.

The polyamide resins include, but are not limited to, polymers such as amide bond-containing polyamide 6, polyamide 66, polyamide 612, polyamide 11, polyamide 12, copolymerization polyamides, polyamide MXD6, polyamide 46, methoxymethylated polyamides, and semi-aromatic polyamides as well as polymers containing polyamide resin compositions as disclosed in Japanese Patent Application Publication No. 2006-321951 or a mixture thereof.

In addition, in order to improve the physical properties, more than one resin can be mixed and used as long as the effects of the present invention are not impaired. Alternatively, the following additives may be contained.

Examples of the additives include known additives such as flame retardants, flame retardant aids, anti-dripping agents when heated, plasticizers, antioxidants, mold release agents, light stabilizers, weathering agents, colorants, pigments, modifiers, antistatic agents, hydrolysis inhibitors, fillers, reinforcing agents other than fiber components (talc, clay, mica, glass flakes, milled glass, glass beads, crystalline silica, alumina, silicon nitride, aluminum nitride, boron nitride, and the like)

For example, the additive is preferably 10 parts by mass or less, and more preferably 5 parts by mass or less relative to 100 parts by mass of the matrix component.

(Sheet Component)

The sheet component in the present invention can be arbitrarily selected from those having a high interpenetrating ability for the matrix component described above and mainly composed of a polymer having higher heat resistance than that of the matrix resin.

In addition, the area of the interface between the above-described matrix component after molding and the sheet component is preferably large because the adhesive force between the matrix component and the sheet component is further enhanced. Specifically, the air permeability per unit thickness of the sheet component is preferably small because the matrix component can easily enter the inside of the sheet component during molding, resulting in a large area of the interface, and air permeability/thickness is particularly preferably 20 (sec/$\mu$m) or less.

Specific examples of the sheet component include a sheet mainly composed of an aramid having an amide bond when the matrix component contains an amide bond, a sheet mainly composed of a polyester containing an ester bond when the matrix component contains an ester bond, and the like. However, a polymer having higher heat resistance than that of the matrix resin is preferably a main component because, even when the matrix resin is melted during molding, the sheet component maintains its shape, so that higher impact resistance can be expected.

The content ratio of the sheet component blended in the fiber-reinforced body is selected in a preferred manner as long as the effects of the present invention are not impaired, but is preferably 0.3 to 30% by volume, still further preferably 0.5 to 20% by volume, and most preferably 1 to 15% by volume based on the volume of the entire fiber-reinforced body.

In order to suppress problems such as the generation of voids during molding of the fiber-reinforced material, the amount of the sheet component blended is preferably 30% by volume or less, and from the viewpoint of impact resistance of the fiber-reinforced material, the amount of the sheet component blended is preferably 0.3% by volume or more.

(Aramid)

In the present invention, the aramid means a linear polymer compound (aromatic polyamide) in which 60% or more of the amide bonds are directly bonded to aromatic rings. Examples of such aramids include polymetaphenylene isophthalamide and copolymers thereof, polyparaphenylene terephthalamide and copolymers thereof, poly(paraphenylene)-copoly(3,4 diphenyl ether)terephthalamide, and the like. These aramids are industrially produced by a conventionally known interfacial polymerization method, solution polymerization method, and the like using, for example, isophthalic acid chloride and metaphenylenediamine, and can be obtained as commercial products, but are not limited thereto. The preferably used of these aramids is polymetaphenylene isophthalamide because of properties such as good formability, thermal adhesiveness, flame retardancy, and heat resistance and especially because of processability to various three-dimensional members after being planarized and ease of trimming.

(Aramid Fibrid)

In the present invention, an aramid fibrid is a film-shaped aramid particle having papermaking properties and is also called an aramid pulp (see Japanese Examined Patent Application Publication No. Sho 35-11851, Japanese Examined Patent Application Publication No. Sho 37-5732, and the like).

Aramid fibrids are widely known to be used as a raw material for papermaking (a raw material for paper-make) after being disintegrated and beaten in the same manner as ordinary wood pulp, and can be subjected to so-called beating processing for the purpose of maintaining quality suitable for papermaking. This beating processing can be performed by a disk refiner, a beater, or other processing equipment for raw material for paper-make which exerts a mechanical cutting action. In this operation, the form change of the fibrid can be monitored by the freeness test method (freeness) stipulated in Japanese Industrial Standards P8121. In the present invention, the freeness of an aramid fibrid after beating processing is preferably within the range of 10 cm$^3$ to 300 cm$^3$ (Canadian freeness). For fibrids with a freeness greater than this range, the strength of the multi-thermal electrical insulation sheet material formed therefrom may be lowered. On the other hand, when it is desired to obtain a freeness less than 10 cm$^3$, the utilization efficiency of the mechanical power to be inputted is reduced, the amount of processing per unit time is often reduced, and the so-called binder function is liable to be reduced because the fineness of the fibrid excessively proceeds. Therefore, no particular advantage is obtained even when it is desired to obtain a freeness less than 10 3 cm$^3$.

(Aramid Short Fiber)

An aramid short fiber is obtained by cutting a fiber made of aramid, and examples of such a fiber include, but are not limited to, those available under trade names such as "Teijinconex (registered trademark)" manufactured by Teijin Limited and "Nomex (registered trademark)" manufactured by DuPont.

The length of aramid short fibers can be selected in general from the range of 1 mm or more and less than 50 mm, preferably 2 to 10 mm. When the length of a short fiber is less than 1 mm, the mechanical properties of the sheet material are deteriorated. Meanwhile, when the length is 50 mm or more, "entanglement," "binding," and the like are likely to occur in the production of an aramid sheet by a wet method, which is likely to result in defects.

(Aramid Sheet)

In the present invention, an aramid sheet is a sheet-shaped article mainly composed of the above-described aramid fibrid, aramid short fiber, or a mixture thereof, and generally has a thickness in the range of 20 $\mu$m to 1000 $\mu$m. Moreover, aramid sheets generally have a basis weight in the range of 10 g/m$^2$ to 1000 g/m$^2$.

Here, when an aramid short fiber is used, usable binders include aramid fibrids as well as thermoplastic polymer fibers made of polypropylene, polyethylene terephthalate, polyphenylene sulfide, nylon, rayon, ethylene-tetrafluoroethylene, and polyvinylidene fluoride, and further include epoxy resins, phenol resins, polyurethane resins, and melamine resins. In addition, when an aramid fibrid is used as a binder, usable main fibers include aramid short fibers as well as heat resistant fibers selected from polyphenylene sulfide, wholly aromatic polyester, glass fiber, polyimide, polyamideimide, polyetherimide, polytetrafluoroethylene, polyaminobismaleimide, carbon fiber. In addition, as another papermaking material, it is possible to use a papermaking material subjected to high pressure jetting by the method described in Japanese Patent Application No. 2013-001706. Among the above, an aramid sheet containing at least an aramid short fiber and an aramid fibrid is preferable, and particularly preferable is an aramid sheet containing at least an aramid short fiber, an aramid fibrid, and a raw material for paper-make subjected to a high pressure jetting by the method described in Japanese Patent Application No. 2013-001706 because air permeability/thickness is small.

The aramid sheet is generally produced by a method of mixing the above-described aramid fibrid and aramid short fiber and then forming a sheet. Specifically, it is possible to apply, for example, a method of dry blending the aramid fibrid and the aramid short fiber and then using airflow to form a sheet, a method in which aramid fibrids and aramid short fibers are dispersed and mixed in a liquid medium, then discharged onto a liquid permeable support, for example, a net or a belt to form a sheet, and the liquid is removed and dried, and the like. Among these, a so-called wet papermaking method using water as a medium is preferably selected. Here, the mixing ratio of the aramid fibrids and the aramid short fibers can be set as desired, but the ratio (mass ratio) of aramid fibrids/aramid short fibers is preferably 1/9 to 9/1, and more preferably 2/8 to 8/2. In addition, when a raw material for paper-make subjected to a high pressure jetting by the method described in Japanese Patent Application No. 2013-001706 is added to the above-described aramid sheet, the bending impact resistance is further improved.

The wet papermaking method generally includes a method in which a single or mixed aqueous slurry containing at least aramid fibrids and short aramid fibers is fed to a paper machine and dispersed, then dewatered, squeezed, and dried, and thereby wound up as a sheet. The paper machines used include a Fourdrinier paper machine, a cylinder paper machine, an inclined paper machine, and a combination paper machine combining these. In the case of production with a combination paper machine, it is possible to obtain a composite sheet composed of two or more paper layers by forming and combining slurry having different blending ratios. Additives such as a dispersibility improver, an antifoaming agent, and a paper strength enhancer are used as necessary during papermaking.

The aramid sheet obtained as described above is known to improve density, crystallinity, heat resistance, and dimensional stability as well as mechanical strength by hot pressing at high temperature and high pressure between a pair of rolls. For example, in the case of using a metal roll, examples of the hot pressure conditions include, but are not limited to, a temperature of 100 to 400°C and a linear pressure of 50 to 400 kg/cm. It is possible to stack two or more aramid sheets during hot pressing. The above hot pressing can be performed twice or more in any order.

(Fiber-Reinforced Body)

The fiber-reinforced body (preferably a fiber-reinforced sheet) in the present invention is obtained by molding the above-described fiber component, matrix component, and sheet component. The molding method includes generally known injection molding, compression molding, extrusion molding, blow molding, and press molding.

More specifically, the fiber-reinforced body in the present invention preferably has a structure where the sea-island structural body, in which the matrix component and the fiber component form a sea-island structure, and the sheet composed of the sheet component are form a single unit by interpenetration of the matrix component and the sheet component (fiber-reinforced body structure I).

Here, the sea-island structural body in which the matrix component and the fiber component form a sea-island structure can be easily prepared by impregnating the matrix component into an aggregate of fiber components. The impregnation can be performed, for example, by a method in which a matrix component solution obtained by dissolving a matrix component in a solvent is introduced into the voids of the fiber component aggregate, and then the solvent is removed by evaporation or the like. Specific examples include, but are not limited to, the method described in Japanese Patent Application Publication No. 2013-56985, that is, a paper making step in which a fiber component is subjected to wet paper making and processed into a papermaking sheet, a method in which the fiber component of the papermaking sheet is bonded with a binder fiber to form a fiber base material, which is impregnated with a matrix component, and the like.

In addition the preparation can also be carried out by thermally melting the matrix component and then introducing it into the voids of the fiber component aggregate.

In the obtained sea-island structural body, voids such as air may exist.

The formation of a single unit by interpenetration of the matrix component and the sheet component can be performed using a solvent capable of dissolving only the matrix component or a solvent capable of dissolving both the matrix component and the sheet component. In particular, when preparing a sea-island structural body in which the matrix component and the fiber component form a sea-island structure, it is preferable to place a fiber component aggregate on a sheet composed of the sheet component, introduce a matrix component solution, obtained by dissolving the matrix component in a solvent, into the voids of the fiber component aggregate, and use interpenetration of the matrix component and the sheet component, to thereby form the fiber component, matrix component, and sheet component into a single unit.

In addition, it is also preferable to stack the sea-island structural body and the sheet composed of the sheet component, then carrying out (pressure) heating to fuse the matrix component and the sheet component present at a close contact portion between the sea-island structural body and the sheet, and heat-seal the sea-island structural body and the sheet to form a single unit.

In the present invention, the sea-island structural body and the sheet preferably form a single unit with a film composed of the matrix component in between (fiber-reinforced structure II). This structure II is preferably produced by, for example, stacking the sea-island structural body, in which the matrix component and the fiber component form the sea-island structure, and the sheet composed of the sheet component with the film composed of the matrix component in between, then carrying out (pressure) heating to fuse the matrix component present at a close contact portion between the sea-island structural body and the film, and the matrix component and the sheet component present at a close contact portion between the film and the sheet, to thereby heat-seal the sea-island structural body, the film, and the sheet.

In the present invention, it is preferable that a film composed of the matrix component be provided on the surface of the sheet constituting the outermost layer (fiber-reinforced body structure III). This structure III is preferably produced by stacking the film composed of the matrix component on the surface of the sheet of the structure I or the structure II, then carrying out (pressure) heating to fuse the matrix component and the sheet component present at a close contact portion between the film and the sheet, to thereby heat-seal the film and the sheet.

Moreover, also preferable in the present invention is a single unit including a stacked body I obtained by stacking two or more sea-island structural bodies and one or more stacked bodies II of a three-layer stacked body containing a film composed of a matrix component/a sheet composed of a sheet component/a film composed of a matrix component (fiber-reinforced body structure IV). This structure IV can be easily produced by applying the above-described production method to the structures I to III.

The sheet composed of the sheet component used in the present invention preferably has a thickness of 10 $\mu$m to 1000 $\mu$m, and more preferably has an air permeability and thickness satisfying the following formula

$$\text{air permeability/thickness} \leq 20 \text{ (sec/}\mu\text{m)}.$$

When the fiber-reinforced body of the present invention has a sheet shape, the thickness is preferably 50 $\mu$m to 50 mm, but is not limited thereto.

In the fiber-reinforced body of the present invention, a time at which cohesive failure starts when a 180 degree peel test is performed between the matrix component and the sheet component at a rate of 50 mm/min preferably satisfies the following formula

$$\text{cohesive failure start time} \leq 20 \text{ (seconds)}.$$

(Cohesive Failure Start Time)

The cohesive failure start time in the present invention refers to the time at which the cohesive failure of the sheet component and/or the matrix component starts when a peel test is performed at the interface between the matrix component and the sheet component after molding.

When the interface between the matrix component and the sheet component is firmly adhered, the cohesive failure of the sheet component and/or the matrix component tends to start earlier. That is, when the interface is firmly adhered, the strength of the sheet component and/or the matrix component itself is lower than the strength of the interface, and thus the cohesive failure of the sheet component and/or the matrix component starts. Usually, when a cohesive failure starts, the peel strength starts to be lowered from that point in time, so that the time at which the cohesive failure starts may be considered the same as the time showing the maximum peel strength.

In addition, in the fiber-reinforced body of the present invention, an IZOD impact energy absorbability preferably satisfies the following formula

$$\text{IZOD impact energy absorbability} \geq 16 \ (\text{kJ/m}^2).$$

The IZOD impact energy absorbability is in accordance with JIS K7110 and can be measured as the energy absorbability per unit cross-sectional area.

The fiber-reinforced body of the present invention can be deformed three-dimensionally by a known processing method, processed into various molded products, and used. For example, the fiber-reinforced body of the present invention can be deformed three-dimensionally for use in automobile structural materials, aircraft structural materials, other industrial structural materials, sporting goods, and the like.

Hereinafter, the present invention is described with reference to Examples. Note that these examples are intended for explaining the content of the present invention using examples, and do not limit the content of the present invention.

[Examples]

(Measuring Method)

(1) Measurement of Length Weighted Average Fiber Length

Fiber Quality Analyzer manufactured by Op Test Equipment was used to measure the length weighted average fiber length of about 4000 fine particles.

(2) Measurement of Basis Weight and Thickness

Measurement was carried out according to JIS C2300-2.

(3) Calculation of Density

The density was calculated as basis weight/thickness.

(4) Measurement of Cohesive Failure Start Time by Peel Test

A Tensilon tensile tester was used to carry out the test at a width of 15 mm, a length of 70 mm, a grip length of 10 mm, a peeling angle of 180 degrees, and a peeling rate of 50 mm/min. The time at which the maximum peel strength was exhibited was defined as the cohesive failure start time.

(5) Measurement of Air Permeability

A Gurley air permeability measuring instrument stipulated in JIS P8117 was used to measure the time (seconds) required for 100 cc ($0.1 \ \text{dm}^3$) of air to pass through a sheet sample (area of $642 \ \text{mm}^2$) pressed by a clamping plate having a circular hole with an outer diameter of 28.6 mm.

(6) Measurement of Three-Point Bending Maximum Strength and Three-Point Bending Fracture Strain by Three-Point Bending Test

A test piece having a width of 12 mm and a length of 65 mm was used to carry out a three-point bending test at an indenter radius of 5 mm, a fulcrum radius of 2 mm, a fulcrum distance of 40 mm, and a bending rate of 1 mm/sec, and the strength when the maximum strength was exhibited was defined as the three-point bending maximum strength, and the strain when the test piece was broken was defined as the three-point bending fracture strain.

(7) Measurement of Energy Absorbability by IZOD Impact Test

The energy absorbability per unit cross-sectional area was measured in accordance with JIS K7110.

(Raw Material Preparation 1)

Polymetaphenylene isophthalamide fibrids (hereinafter referred to as an aramid fibrid) were produced using a pulp particle production apparatus (wet precipitation machine) made up of a combination of a stator and a rotor described in Japanese Patent Application Publication No. Sho 52-15621. These were treated with a disintegrator and a beater to adjust the length weighted average fiber length to 0.9 mm (freeness of aramid fibrids: 100 ml (Canadian freeness)).
On the other hand, polymetaphenylene isophthalamide fibers (Nomex (registered trademark), single yarn fineness of 2 denier) manufactured by DuPont were cut into a length of 6 mm (hereinafter referred to as "aramid short fibers").

(Production of Calendered Aramid Paper)

The prepared aramid fibrids and aramid short fibers were separately dispersed in water to form slurries. These slurries were mixed so that the blend ratio (mass ratio) of the fibrids and the aramid short fibers was 1/1, and a sheet-shaped article was prepared with a TAPPI-type manual paper machine (cross-sectional area of 625 cm$^2$). Next, this was hot pressed with a metal calender roll at a temperature of 330°C and a linear pressure of 300 kg/cm to obtain calendered aramid paper.

(Raw Material Preparation 2)

The above-described calendered aramid paper was subjected to high pressure jetting by the method described in Japanese Patent Application No. 2013-001706 to obtain a raw material for paper-make having a length weighted average fiber length adjusted to 0.4 mm.

(Examples 1 to 3 and Control Example)

(Production of Fiber-Reinforced Sheet)

The prepared raw material for paper-make, the prepared aramid fibrids, and the prepared aramid short fibers were separately dispersed in water to prepare slurries. These slurries were mixed to the blend ratios (mass ratios) presented in Table 1, and a sheet-shaped article was prepared with a TAPPI-type manual paper machine (cross-sectional area of 625 cm$^2$). Next, this was hot pressed at a temperature of 330°C and a linear pressure of 300 kg/cm with a metal calender roll to obtain an aramid sheet. In addition, as a sheet composed of carbon fiber and polyamide 6, CARMIX CFRP (PA6) (manufactured by AWA PAPER & TECHNOLOGICAL COMPANY, Inc., 80% by volume of polyamide 6, 20% by volume of carbon fiber, thickness of 1140 $\mu$m) and a polyamide 6 film (thickness of 50 $\mu$m) were stacked to the ratios presented in Table 1, inserted into a mold having the same size as that of the sheet, and pressed under the conditions presented in Table 1.
Table 1 presents the main property values of the fiber-reinforced sheets thus obtained. Note that, for the three-point bending test, an indenter was applied from above the upper surface of the fiber-reinforced sheet. For the IZOD impact test, impact was applied from above the upper surface of the fiber-reinforced sheet.
In Table 1, the stacking order (ii) $\times$ 24/((iii)/(i)/(iii)) in Example 1 indicates that 24 sheets of CARMIX CFRP (PA6) (ii) were stacked on a stacked body of polyamide 6 film (iii)/aramid sheet (i)/polyamide 6 film (iii), inserted into a mold, and pressed under the conditions presented in Table 1.
In addition, in order to carry out the peel test, stacking was performed so that the ratios presented in Table 2 were obtained, and an unpressed portion of 10 mm (15 mm in width) was secured so as to be held by a chuck for a tensile test, and pressing was performed under the conditions presented in Table 2. Table 2 presents the results of the peel test carried out at the interface between the polyamide 6 film and the aramid sheet.

Table 1

| Property | Unit | Example 1 | Example 2 | Example 3 | Ref. Exam. |
|---|---|---|---|---|---|
| Aramid Sheet Basis Weight | g/m$^2$ | 43.2 | 42.9 | 43.2 | None 0 |

(continued)

| Property | Unit | Example 1 | Example 2 | Example 3 | Ref. Exam. |
|---|---|---|---|---|---|
| Aramid Sheet |  |  |  |  | None |
| Thickness | μm | 83.4 | 54.4 | 83.4 | - |
| vDensity | g/cm³ | 0.518 | 0.789 | 0.518 | - |
| Air Permeability | seconds | 250 | ≥ 30,000 | 250 | - |
| Air Permeability/ Thickness | sec/μm | 3.0 | ≥ 551.5 | 3.0 |  |
| Aramid Sheet (i) | % by Volume |  |  |  |  |
| R. M. Composition |  |  |  |  |  |
| R. M. for Paper-make |  | 0.7 | 0 | 2.4 | 0 |
| Aramid Fibrid |  | 0.4 | 0.7 | 1.4 | 0 |
| Aramid Short Fiber |  | 0.3 | 0.7 | 0.9 | 0 |
| CARMIX CFRP (PA6) (ii) |  |  |  |  |  |
| R. M. Composition |  |  |  |  |  |
| Carbon Fiber |  | 18.9 | 18.9 | 16.1 | 20.0 |
| Polyamide 6 |  | 75.5 | 75.5 | 64.5 | 80.0 |
| Polyamide 6 Film (iii) |  | 4.3 | 4.3 | 14.6 | 0 |
| Press Conditions |  |  |  |  |  |
| Stacking Order |  | (ii)×24/((iii) /(i)/ (iii)) | (ii)×24/((iii) /(i)/ (iii)) | (ii)×24/((iii) /(i)/ (iii))×4 | (ii)×24 |
| Temperature | °C | 250 | 250 | 250 | 250 |
| Pressure | MPa | 5 | 5 | 5 | 5 |
| Time | minutes | 10 | 10 | 10 | 10 |
| Basis Weight | g/m² | 3065 | 3065 | 3557 | 2902 |
| Thickness | mm | 2.30 | 2.32 | 2.69 | 2.18 |
| Density | g/cm³ | 1.33 | 1.32 | 1.32 | 1.33 |
| Three-Point Bending Maximum Strength | MPa | 403 | 391 | 345 | 388 |
| Three-Point Bending Fracture Strain | % | 2.2 | 2.3 | 3.1 | 2.0 |
| IZOD Impact Energy Absorbability | kJ/m² | 17.0 | 16.2 | 22.8 | 15.4 |
| Ref. Exam. means Referential Example, and R. M. means raw material | | | | | |

Table 2

| Property | Unit | Example 1 | Example 2 | Example 3 |
|---|---|---|---|---|
| Aramid Sheet |  |  |  |  |
| Basis Weight | g/m² | 43.2 | 42.9 | 43.2 |
| Thickness | μm | 83.4 | 54.4 | 83.4 |
| Density | g/cm³ | 0.518 | 0.789 | 0.518 |
| Air Permeability | seconds | 250 | ≥ 30,000 | 250 |
| Air Permeability/Thickness | sec/μm | 3.0 | ≥ 551.5 | 3.0 |
| Aramid Sheet (i) | % by Volume |  |  |  |
| Raw Material Composition |  |  |  |  |
| R. M. for Paper-make |  | 9.3 | 0 | 9.3 |
| Aramid Fibrid |  | 5.6 | 9.3 | 5.6 |

(continued)

| Aramid Sheet (i) Raw Material Composition Aramid Short Fiber | % by Volume | 3.7 | 9.3 | 3.7 |
|---|---|---|---|---|
| CARMIX CFRP (PA6) (ii) Raw Material Composition Carbon Fiber Polyamide 6 Polyamide 6 Film (iii) | | 10.6 42.2 28.6 | 10.6 42.2 28.6 | 10.6 42.2 28.6 |
| Press Conditions Stacking Order Temperature Pressure Time | °C MPa minutes | (ii)/(iii)/(i) 250 5 10 | (ii)/(iii)/(i) 250 5 10 | (ii)/(iii)/(i) 250 5 10 |
| Basis Weight | g/m$^2$ | 218 | 220 | 218 |
| Thickness | $\mu$m | 878 | 816 | 878 |
| Density | g/cm$^3$ | 0.249 | 0.274 | 0.249 |
| Cohesive Failure Start Time | seconds | 4.6 | 6.7 | 4.6 |

It can be considered from the results of Table 1 and Table 2 that the fiber-reinforced sheet of the present invention (Examples 1 to 3) is useful as a fiber-reinforced sheet having a high bending impact resistance because of high three-point bending maximum strength, three-point bending fracture strain, and IZOD impact energy absorbability. In addition, since the fiber-reinforced sheet of the present invention contains an aramid sheet composed of polymetaphenylene isophthalamide, it has properties such as good molding formability, flame retardancy, and heat resistance, and thus is considered to be also suitable for three-dimensional processing.

(Comparative Example)

(Production of Fiber-Reinforced Sheet)

An aramid sheet was obtained in the same manner as in Examples. In addition, as a sheet composed of carbon fiber and polypropylene, CARMIX CFRP (PP) (manufactured by AWA PAPER & TECHNOLOGICAL COMPANY, Inc., 80% by volume of polypropylene, 20% by volume of carbon fiber) and a polypropylene film were stacked to the ratios presented in Table 3, inserted into a mold having the same size as that of the sheet, and pressed under the conditions presented in Table 3.
Table 3 presents the main property values of the fiber-reinforced sheets thus obtained. Note that, for the three-point bending test, an indenter was applied from above the upper surface of the fiber-reinforced sheet.
In addition, in order to carry out the peel test, stacking was performed so that the ratios presented in Table 4 were obtained, and an unpressed portion of 10 mm (15 mm in width) was secured so as to be held by a chuck for a tensile test, and pressing was performed under the conditions presented in Table 4. Table 4 presents the results of the peel test carried out at the interface between the polypropylene film and the aramid sheet.

Table 3

| Property | Unit | Comparative Example |
|---|---|---|
| Aramid Sheet Basis Weight Thickness Density Air Permeability Air Permeability/Thickness | g/m$^2$ $\mu$m g/cm$^3$ seconds sec/$\mu$m | 43.2 83.4 0.518 250 3.0 |

(continued)

| Aramid Sheet (i) | % by Volume | |
|---|---|---|
| Raw Material Composition | | |
| Raw Material for Paper-make | | 0.5 |
| Aramid Fibrid | | 0.3 |
| Aramid Short Fiber | | 0.2 |
| CARMIX CFRP (PP) (iv) | | |
| Raw Material Composition | | |
| Carbon Fiber | | 19.0 |
| Polypropylene | | 76.0 |
| Polypropylene Film (v) | | 3.9 |
| Press Conditions | | |
| Stacking Order | | (iv)$\times$24/((v)/(i)/(v)) |
| Temperature | °C | 200 |
| Pressure | MPa | 5 |
| Time | minutes | 10 |
| Basis Weight | g/m$^2$ | 3169 |
| Thickness | mm | 2.99 |
| Density | g/cm$^3$ | 1.06 |
| Three-Point Bending Maximum Strength | MPa | 330 |
| Three-Point Bending Fracture Strain | % | 2.3 |

Table 4

| Property | Unit | Comparative Example |
|---|---|---|
| Aramid Sheet | | |
| Basis Weight | g/m$^2$ | 43.2 |
| Thickness | $\mu$m | 83.4 |
| Density | g/cm$^3$ | 0.518 |
| Air Permeability | seconds | 250 |
| Air Permeability/ Thickness | sec/$\mu$m | 3.0 |
| Aramid Sheet (i) | % by Volume | |
| Raw Material Composition | | |
| Raw Material for Paper-make | | 7.5 |
| Aramid Fibrid | | 4.5 |
| Aramid Short Fiber | | 3.0 |
| CARMIX CFRP (PP) (iv) | | |
| Raw Material Composition | | |
| Carbon Fiber | | 11.3 |
| Polypropylene | | 45.4 |
| Polypropylene Film (v) | | 28.3 |
| Press Conditions | | |
| Stacking Order | | (iv)/(v)/(i) |
| Temperature | °C | 200 |
| Pressure | MPa | 5 |
| Time | minutes | 10 |
| Basis weight | g/m$^2$ | 213 |

(continued)

| Press Conditions | | |
|---|---|---|
| Thickness | μm | 838 |
| Density | g/cm$^3$ | 0.256 |
| Cohesive failure start time | seconds | 60.8 |

It is considered from the results of Table 3 and Table 4 that the adhesive force between polypropylene (matrix component) and aramid sheet (sheet component) was not sufficient, and the three-point bending maximum strength was also low, so that sufficient bending impact resistance was not obtained.

**Claims**

1.  A fiber-reinforced body comprising: a fiber component; a matrix component; and a sheet component, wherein the matrix component and the sheet component exhibit an interpenetrating ability.

2.  The fiber-reinforced body according to claim 1, wherein a sea-island structural body, in which the matrix component and the fiber component form a sea-island structure, and a sheet composed of the sheet component form a single unit by interpenetration of the matrix component and the sheet component.

3.  The fiber-reinforced body according to claim 2, wherein the sea-island structural body and the sheet form a single unit with a film composed of the matrix component in between.

4.  The fiber-reinforced body according to any one of claims 1 to 3, wherein the matrix component is a resin having an amide bond, and the sheet is an aramid sheet.

5.  The fiber-reinforced body according to claim 4, wherein the matrix component is a thermoplastic resin having an amide bond.

6.  The fiber-reinforced body according to claim 4, wherein the aramid sheet contains metaphenylene isophthalamide.

7.  The fiber-reinforced body according to any one of claims 1 to 6, wherein the fiber component is a carbon fiber.

8.  The fiber-reinforced body according to any one of claims 1 to 7, wherein a volume fraction of the sheet component satisfies the following formula

$$0.3 \ (\% \text{ by volume}) \leq \text{sheet component} \leq 30 \ (\% \text{ by volume}).$$

9.  The fiber-reinforced body according to any one of claims 1 to 8, wherein a volume ratio of the fiber component to the matrix component is 1/99 to 40/60.

10.  The fiber-reinforced body according to any one of claims 1 to 9, wherein a time at which cohesive failure starts when a 180 degree peel test is performed between the matrix component and the sheet component at a rate of 50 mm/min satisfies the following formula

$$\text{cohesive failure start time} \leq 20 \ (\text{seconds}).$$

11.  The fiber-reinforced body according to any one of claims 1 to 10, wherein an air permeability and a thickness of the sheet composed of the sheet component satisfy the following formula

$$\text{air permeability/thickness} \leq 20 \ (\text{sec}/\mu\text{m}).$$

**12.** The fiber-reinforced body according to any one of claims 1 to 11, wherein an IZOD impact energy absorbability satisfies the following formula

$$\text{IZOD impact energy absorbability} \geq 16 \ (\text{kJ/m}^2).$$

**13.** A fiber-reinforced member obtained by three-dimensionally deforming the fiber-reinforced body according to any one of claims 1 to 12.

**14.** A method of producing the fiber-reinforced body according to claim 2, comprising stacking the sea-island structural body, in which the matrix component and the fiber component form the sea-island structure, and the sheet composed of the sheet component, and then carrying out pressure heating to interpenetrate the matrix component and the sheet component present at a close contact portion between the sea-island structural body and the sheet, to thereby heat-seal the sea-island structural body and the sheet.

**15.** A method of producing the fiber-reinforced body according to claim 3, comprising stacking the sea-island structural body, in which the matrix component and the fiber component form the sea-island structure, and the sheet composed of the sheet component with the film composed of the matrix component in between, and then carrying out pressure heating to interpenetrate the matrix component present at a close contact portion between the sea-island structural body and the film, and the matrix component and the sheet component present at a close contact portion between the film and the sheet, to thereby heat-seal the sea-island structural body, the film, and the sheet.

## INTERNATIONAL SEARCH REPORT

| International application No. |
|---|
| PCT/JP2018/026455 |

A. CLASSIFICATION OF SUBJECT MATTER
Int.Cl. C08J5/04(2006.01)i, B32B5/28(2006.01)i
According to International Patent Classification (IPC) or to both national classification and IPC

B. FIELDS SEARCHED

Minimum documentation searched (classification system followed by classification symbols)
Int.Cl. C08J5/04, B32B5/28

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2008-238624 A (TORAY INDUSTRIES, INC.) 09 October 2008, claim 1, paragraphs [0027], [0029], [0030], [0033]-[0035], example 1 (Family: none) | 1, 2, 4, 5, 7-14 |
| Y | | 3, 6, 15 |
| Y | JP 4-288227 A (BASF AKTIENGESELLSCHAFT) 13 October 1992, claim 1, paragraph [0014] & US 5149574 A1 claim 1, column 2, lines 19-34 & EP 438766 A2 | 3, 15 |
| Y | JP 2007-138146 A (TEIJIN TECHNO PRODUCTS LTD.) 07 June 2007, claim 3, paragraphs [0012]-[0014], [0036]-[0042], examples 1-6 (Family: none) | 6 |
| X | JP 5-117411 A (TEIJIN LTD.) 14 May 1993, paragraphs [0001], [0038], [0091], [0103], [0109]-[0115], example 2 & US 5316834 A1, column 1, lines 6-14, column 5, lines 46-50, column 14, lines 3-12, column 15, lines 29-40, column 16, line 19 to column 17, line 22, example 2 & EP 510927 A2 | 1, 2, 4-13 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 September 2018 (13.09.2018) | 25 September 2018 (25.09.2018) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2018/026455

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2013-223962 A (DUPONT TEIJIN ADVANCED PAPERS, LTD., KAWAMURA SANGYO CO., LTD.) 31 October 2013, claim 1, paragraphs [0009]-[0013], [0023] & US 2015/0111013 A1, claim 1, paragraphs [0022]-[0032], [0062], [0063] & WO 2013/157538 A1 & KR 10-2015-0002789 A & CN 104395079 A | 1-15 |
| P, X | JP 2017-170781 A (TORAY INDUSTRIES, INC.) 28 September 2017, claims 1, 4, 5, paragraphs [0001], [0028], [0036], [0039], [0045], [0054], example 7 (Family: none) | 1, 2, 4, 5, 7, 13, 14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001181406 A
- JP 2006321951 A
- JP SHO3511851 B
- JP SHO375732 B

- JP 2013001706 A
- JP 2013056985 A
- JP SHO5215621 B